(19) Europäisches Patentamt
European Patent Office
Office européen des brevets

(11) EP 4 614 840 A1

(12) EUROPEAN PATENT APPLICATION

(43) Date of publication:
**10.09.2025 Bulletin 2025/37**

(21) Application number: **24161104.5**

(22) Date of filing: **04.03.2024**

(51) International Patent Classification (IPC):
***H04B 10/61*** *(2013.01)* ***H04L 7/033*** *(2006.01)*

(52) Cooperative Patent Classification (CPC):
**H04B 10/6165; H04B 10/272; H04L 7/033;**
H04L 7/0062; H04L 7/0334; H04L 7/04;
H04L 2007/047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Solutions and Networks Oy**
**02610 Espoo (FI)**

(72) Inventors:
- **VAN ROMPAEY, Robbe**
  **2800 Mechelen (BE)**
- **VERPLAETSE, Michiel**
  **9810 Nazareth (BE)**

(74) Representative: **IP HILLS NV**
**Bellevue 5/501**
**9050 Gent-Ledeberg (BE)**

# (54) PHASE ESTIMATION FOR CLOCK-AND-DATA RECOVERY INITIALISATION IN AN OPTICAL RECEIVER OF A PASSIVE OPTICAL NETWORK

(57) An optical receiver for a passive optical network, comprising a phase estimation circuitry and a clock-and-data recovery, CDR, circuitry, wherein the CDR circuitry is configured to be initialised with an estimate of an initial phase error between a received optical signal and a reference clock, and wherein the phase estimation circuitry is configured to estimate the initial phase error by: sampling a portion of an optical signal during consecutive unit intervals; wherein the sampling is performed in at least one of a plurality of possible sampling positions; wherein the sampling is performed such that a plurality of samples is obtained for each of the possible sampling positions; determining a temporal property in the respective sampling position at least from the plurality of samples corresponding to the possible sampling position; fitting a curve characterising the temporal property within a unit interval; and estimating the initial phase error from the fitted curve.

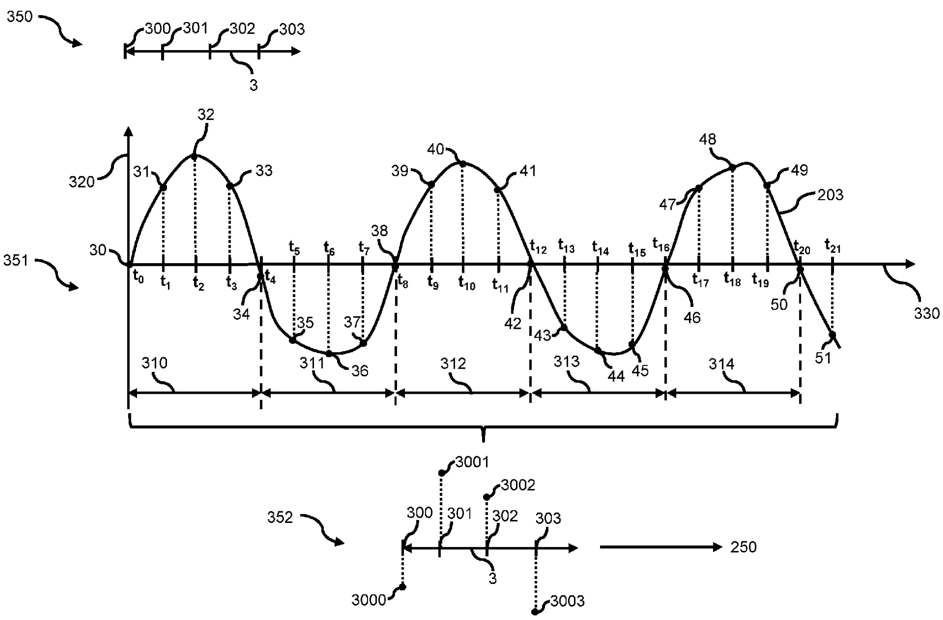


Fig. 3



Processed by Luminess, 75001 PARIS (FR)

## Description

### Field of the Invention

The present invention generally relates to an optical receiver, an optical line terminal, OLT, and an optical network unit, ONU, for a passive optical network.

### Background of the Invention

Passive optical networks, PONs, provide telecommunication by use of fibre-optic technology. PONs have a one-to-multiple structure, wherein a central optical line terminal, OLT, services a plurality of optical network units, ONUs. The OLT and ONUs are connected via an optical distribution network, ODN, comprising passive elements, such as fibre-optic cables and passive optical splitters. Downstream communication, i.e. from OLT to ONUs, and upstream communication, i.e. from an ONU to the OLT, may be enabled through a single channel for bidirectional communication. Communication is managed by the OLT by use of predefined protocols.

The OLT organises upstream communication such that ONUs can send bursts of information to the OLT. To this end, the OLT may, for example, implement time-division multiplexing, TDM, or time and wavelength-division multiplexing, TWDM. During such burst-mode communication, at least a single wavelength band is temporarily occupied by one ONU, thereby blocking other communication. Momentarily, all but one ONU are prohibited from communicating with the OLT. When processing a burst received from an ONU, the OLT may need to synchronise to the incoming signal to correctly extract data from the burst by sampling at appropriate sampling times. Such a synchronisation process may be referred to as clock-and-data recovery, CDR. Because of the critical nature of upstream communication, overhead such as resulting from CDR, may have an effect on the overall performance of a PON.

### Summary of the Invention

According to some aspects, there is provided the subject matter of the independent claims. Some further aspects are defined in the dependent claims.

According to a first aspect, an optical receiver for a passive optical network, PON, is provided. The optical receiver comprises a phase estimation circuitry and a clock-and-data recovery, CDR, circuitry. The CDR circuitry is configured to be initialised with an estimate of an initial phase error between a received optical signal and a reference clock. The phase estimation circuitry is configured to estimate the initial phase error by performing the following steps. A step of receiving a portion of the optical signal, the portion comprising consecutive unit intervals. A step of sampling the portion during the consecutive unit intervals using the reference clock; wherein, in each of the consecutive unit intervals, the sampling is performed in at least one of a plurality of possible sampling positions; and wherein the sampling is further performed such that a plurality of samples is obtained for each of the possible sampling positions. A step of determining, for at least one possible sampling position, a temporal property of the portion of the optical signal in the respective sampling position at least from the plurality of samples corresponding to the possible sampling position, thereby obtaining a temporal property for each of the at least one possible sampling position. A step of fitting a curve characterising a change of the temporal property within a unit interval. And a step of estimating the initial phase error from the fitted curve.

The CDR process is initialised using an initial phase of the reference clock. In an iteration of the CDR process, the CDR circuitry is configured to determine a phase error and thereafter compensate the phase error to adjust the sampling moment. The phase error may be described as the difference between the sampling time derived from the reference clock, and the optimal sampling time of a corresponding symbol of the optical signal. The phase error may also be referred to as sample timing error. The initial phase error refers to the actual phase error occurring during a beginning stage of the receiving, e.g. right before the CDR process begins. The CDR circuitry has no previous knowledge about the phase or timing of the optical signal. Therefore, the CDR circuitry may be initialised with an arbitrary initial phase error. Advantageously, the initial phase error is pre-estimated by the phase estimation circuitry by performing a quick phase search according to the method. The phase estimation is performed relatively faster than it takes the CDR circuitry to achieve locking. The quick phase estimation may be performed before and/or during the CDR process. The phase estimation circuitry may speed up the CDR process by providing a realistic initial phase error.

The method comprises defining a plurality of possible sampling positions within, or, in other words, over the course of, a unit interval. The unit interval, UI, is an interval having the length of a period of the symbol rate, also referred to as the symbol frequency or the baud rate. The possible sampling positions may, for example, be as defined by the phases {0; 0.25; 0.5; 0.75} within a unit interval denoted as [0;1]. In each of the consecutive unit intervals, the sampling is performed in at least one of the possible sampling positions. As an example, oversampling may be applied to obtain a sample at each possible sampling position in each unit interval, e.g. four-times oversampling for the example of phases {0; 0.25; 0.5; 0.75}. As another example, fractional sampling may be performed, e.g. oversampling between the baud rate and two-times oversampling. As yet another example, baud rate sampling can be applied, by altering a sampling clock phase in consecutively sampled unit intervals. The sampling clock phase can be shifted by discrete steps to obtain sampling at the appropriate sampling positions. This approach may be referred to as performing a ’phase scan’ or applying a ’phase stepper'. It will be apparent that this can be done in combination with sampling rates other than the baud rate as well as another example to obtain samples at the possible sampling positions. After the sampling step, a set of samples has been collected for each of the possible sampling positions.

The determining step comprises choosing at least one of the possible sampling positions, e.g. sampling positions {0; 0.5} [UI]. The determining step further comprises determining a temporal property or time-related property for each of the chosen sampling positions. The temporal property is obtained by applying a mathematical function on chronologically ordered samples, wherein the mathematical function may reveal a time-related characteristic of the samples. The temporal property, for a sampling position, is determined using the samples corresponding to that sampling position. Optionally, other samples, corresponding to any of the other sampling positions, including those that are not chosen, may also be used. The determining step results in one value of the temporal property for each of the chosen sampling positions, e.g. two values, each corresponding to one of the phases in {0; 0.5} [UI]. This corresponds to determining the behaviour of the temporal property over a unit interval. The initial phase error can be estimated from a curve interpolating the temporal property over the unit interval. Depending on the chosen temporal property and on the applied interpolation technique, the initial phase error can be extracted from the fitted curve in various manners.

By performing the sampling so as to obtain a plurality of samples for the possible phases, variations over consecutive time intervals may be averaged out. The variations may result from errors in the estimation method for the temporal information, e.g. due to input noise, the input bit pattern and decision errors, for example as a result of finite precision calculations. Errors due to non-ideal effects, e.g. clock jitter at the transmitter, distortion of the optical channel or sampling errors at the receiver, may also be averaged out by the method, which may lead to a better estimate. The averaging out may result in an initial phase error estimate that more closely approximates the actual initial phase error. The recovered initial phase error estimate may thus result in an expedited locking of the CDR process. Further, the method is computationally efficient, requiring sampling at only a very limited number, i.e. at least one, of possible sampling positions. The sampling may be performed using limited resources such as using low computational power and memory. Optionally, a regular analogue-to-digital converter, ADC, may be used for the sampling, since the method does not require a sampling rate that is higher than the data sampling rate. In addition, the curve fitting also requires a limited number of calculations, since only a handful of points over the unit interval are interpolated. The method takes into account a number of consecutive intervals, taking enough temporal information to allow significant averaging out of variations. On the other hand, the method does not require an exceedingly long portion of the optical signal to perform well. The additional efficiency during post-processing of the acquired samples leads to a quick result. The time invested in performing the quick phase search may be gained back and may lead to a significant speed-up of the CDR process. When applying the method, the CDR circuitry may reach a locking state substantially quicker than without using the estimate to initialise the CDR, even including the waiting time for obtaining the estimate.

According to further example embodiments, the determining, for at least one possible sampling position, comprises: for each sample of the at least one possible sampling position, performing a phase detector function based on the sample and adjacent samples, thereby obtaining a plurality of phase detector outputs; and averaging the phase detector outputs, thereby obtaining the temporal property for the corresponding possible sampling position.

Performing a phase detection function may be interpreted as multiplying a recovered symbol on the sampling position with an estimate of the gradient on said sampling position, wherein the estimate of the gradient is obtained using adjacent samples. The adjacent samples are adjacent to the considered sample and may also be referred to as neighbouring samples. For example, the adjacent samples may be one or two immediately adjacent samples, e.g. the sample at a time instance right before and the sample at a time instance right after the considered sample. The adjacent samples may correspond to pluralities of samples of the other possible sampling positions and possibly samples corresponding to the phase itself. The phase detector function may be a polynomial phase detector function. The determining step first comprises choosing at least one possible sampling position, e.g. all the phases {0; 0.25; 0.5; 0.75} [UI]. The phase detector function is performed as follows for each of the chosen sampling positions. For a given sampling position, the corresponding plurality of samples is considered. This plurality of samples is extended to a plurality of sample groups, wherein a sample group contains a sample at the sampling position as well as one or more adjacent samples. The phase detector function is performed on each sample group. As a result, a plurality of phase detector outputs is obtained. Each of the phase detector outputs corresponds to a sample of the plurality of samples of the sampling position. An averaging of the phase detector outputs results in a value of the temporal property corresponding to the sampling position.

Phase detector functions capture a temporal behaviour of the optical signal at the sampling position. By taking neighbouring samples into account, the temporal property holds useful phase-related information and the resulting initial phase error estimate, based on the determined temporal behaviour, may be very accurate.

According to further example embodiments, the phase detector function is at least partly linear. The phase detector function may, for example, be a Gardner phase detector function or a Hogge phase detector function.

According to further example embodiments, the phase detector function is at least partly non-linear. The phase detector function may be a bang-bang phase detector function. The phase detector function may, for example, be a zero-crossing phase detector function or an Alexander phase detector function.

According to further example embodiments, the phase detector function is a Mueller-Muller phase detector function. A Mueller-Muller phase detector function may be efficiently implemented.

According to further example embodiments, the determining of a temporal property comprises weighting the corresponding samples with values of a repetitive pattern, alternating at a baud rate corresponding to the unit interval, at corresponding time instances.

The repetitive pattern, e.g. a sinusoidal signal, has a frequency component at the baud rate or symbol frequency, i.e. may have a period duration equal to a symbol duration. Optionally, the repetitive pattern may be based on a preamble pattern of the optical signal. By weighting the signal with a repetitive pattern at the symbol rate, temporal information is extracted in correspondence with the symbol rate. This enables the method to detect phase information over a unit interval.

According to further example embodiments, the fitting of the curve comprises performing a sinusoidal interpolation.

When applying a phase detector function, the temporal property of the possible positions may tend to adhere to a sinusoidal-like progression over the unit interval. After the interpolation, the initial phase error estimate may be recovered at a zero-crossing of the sinusoidal fitted curve.

When applying a weighting of the samples using a repetitive pattern, the resulting temporal property over the unit interval may exhibit a sinusoidal-like behaviour. The initial phase error estimate may be recovered at an extremum of the sinusoidal fitted curve.

According to further example embodiments, estimating the initial phase error comprises determining the initial phase error as a phase within the unit interval where an extremum of the curve occurs.

According to further example embodiments, the determining comprises performing a discrete frequency transformation to obtain a characteristic frequency component of the optical signal for the at least one possible sampling position, and the temporal property comprises an argument of the characteristic frequency component.

A discrete frequency transformation is a time to frequency domain transformation function to be evaluated on samples that are chronologically ordered to obtain a frequency characteristic. A discrete frequency transformation transforms a sequence of samples in the time domain to a sequence of frequency components in the frequency domain. Each frequency component corresponds to a frequency bin. The frequency component at the frequency bin corresponding to the characteristic frequency is determined. As an example, the characteristic frequency may be the symbol frequency. The characteristic frequency may also be another frequency, for example in case the optical signal is known to comprise an energy component around a certain frequency. The discrete frequency transformation may, for example, be a discrete Fourier transform, DFT, a fast Fourier transform, FFT, a weighted DFT, a discrete cosine transform, DCT, or the like. Transforming a discrete signal to a frequency bin involves a sample-wise multiplication with a sinusoidal function at the frequency corresponding to said frequency bin. As such, the component at a certain frequency corresponds to the energy of the discrete signal regarded at said frequency.

The desired initial phase may be chosen as the location where, for an ideally sampled optical signal at the baud rate, the energy of the optical signal on a characteristic frequency is maximal. The initial phase error can be recovered by determining the characteristic frequency component for the different phases defined in the unit interval. The optimal phase may be expected to have the maximal characteristic frequency component, which corresponds to the maximum energy of the optical signal at that frequency.

A frequency component can be a complex number and the argument denotes the angle thereof with respect to the real axis of the complex plane, up to a multiple of $2\pi$ radians or 360°. The argument of the characteristic frequency component is zero when the characteristic frequency component is maximal. The phase within the unit interval for which the argument of the component is zero, is the phase where the optimal sampling moment occurs.

According to further example embodiments, the characteristic frequency component corresponds to half of a baud rate, corresponding to the unit interval.

The sampling step may comprise sampling at any sampling rate, e.g. two times oversampling corresponding to the Nyquist rate of twice the baud rate, higher times oversampling, e.g. 4 times or 8 times oversampling, fractional oversampling, e.g. 4/3 times oversampling, or baud rate sampling. When sampling at the baud rate, aliasing may occur for frequencies higher than half the baud rate. Fixing the characteristic frequency component to half the baud rate may be an effective design choice regarding aliasing as well as computational complexity.

It is noted that the sampling rate may be lower than the baud rate, i.e. undersampling may be performed. Even though aliasing may occur at the frequency bin of half the baud rate, the method may still succeed in providing an accurate enough initial phase error.

According to further example embodiments, performing the discrete frequency transformation for one possible sampling position comprises performing the discrete frequency transformation on consecutive samples, starting from a sample at that possible sampling position.

By consecutive samples is meant temporally consecutive samples. The consecutive samples may be consecutive in the sense that they immediately succeed each other in time. As another example, the consecutive samples may be chronologically succeeding samples originating from the same plurality of samples of a certain sampling position. As an example, the calculation for one sampling position may involve samples corresponding to all the possible sampling positions. According to example embodiments, the attribution of the resulting value to a single sampling position stems from the position of the starting sample. Alternatively, the resulting value can be attributed to a single sampling position based on the position of a centre sample.

According to further example embodiments, fitting the curve comprises performing a linear interpolation.

When applying a discrete frequency transformation, the temporal property of the possible phases may occur on a straight line over the unit interval. After the interpolation, the initial phase error estimate may be recovered at a zero-crossing of the linear fitted curve.

According to further example embodiments, estimating the initial phase error comprises determining the opposite of an argument of the characteristic frequency component.

The fitted curve has a known derivate equal to pi, $\pi$, due to its intrinsic nature of representing an angle in the complex plane. Since the fitted curve is a straight line, a single possible sampling position may suffice to fit the curve and recover the zero-crossing. In this case, the initial phase error can be found as the opposite of the argument of the frequency component, divided by the factor $\pi$.

According to further example embodiments, estimating the initial phase error comprises determining a zero-crossing of the curve.

According to a second aspect, there is provided an optical line terminal, OLT, comprising the optical receiver according to the first aspect. Such an OLT may provide one or more of the above-mentioned advantages.

According to a third aspect, there is provided an optical network unit, ONU, comprising the optical receiver according to the first aspect. Such an ONU may provide one or more of the above-mentioned advantages.

## Brief Description of the Drawings

Fig. 1 illustrates a schematic of a PON comprising an OLT and ONUs comprising an optical receiver according to example embodiments;

Fig. 2 illustrates a schematic of an optical receiver according to example embodiments;

Fig. 3 illustrates a unit interval and an optical signal according to example embodiments;

Fig. 4 illustrates performing a phase detector function according to example embodiments;

Fig. 5 illustrates performing a discrete frequency transformation according to example embodiments; and

Fig. 6 illustrates weighting samples of an optical signal with values of a repetitive pattern according to example embodiments.

## Detailed Description of Embodiment(s)

The present disclosure relates to an optical receiver in a passive optical network, PON. Figure 1 shows a PON 100 comprising an optical line terminal, OLT, 10 and optical network units, ONUs, 11, 12, 13, 14. The OLT 10 and the ONUs 11, 12, 13, 14 are connected to each other via an optical distribution network, ODN, 110, comprising passive components such as optical fibre lines and optical splitters. The OLT 10 and the ONUs 11, 12, 13, 14 each comprise an optical receiver, for example optical receiver 1 according to the first aspect. The optical receiver 1, e.g. in OLT 10, is configured to receive optical signals, e.g. bursts, from an optical transmitter, e.g. in an ONU 11, over the PON 100. The PON 100 may implement time-division multiplexing, TDM, or time- and wavelength-division multiplexing, TWDM.

Figure 2 shows a schematic view of the structural components of an optical receiver 1 according to an example embodiment.

The optical receiver 1 has a clock-and-data recovery, CDR, circuitry 22 configured to perform a CDR process during receiving of an optical signal 200 via the ODN 110. The optical signal 200 may be an optical burst signal originating from, for example, ONU 11 during burst-mode communication. Optical transmitter 11 generates the optical signal 200 using a clock that approximates a predetermined frequency. The predetermined frequency may be equal to the baud rate. To this end, the optical receiver 1 provides the reference clock 220 to target the predetermined frequency. The common knowledge of the targeted frequency shared by the receiver 1 and transmitter enables recovery of data by the receiver 1.

The circuitry 22 performs sampling of the optical signal 200 using a sampling clock derived from the reference clock 220. The sampling clock may also be referred to as sampling clock signal and the reference clock may also be referred to as reference clock signal. The reference clock 220 may be the sampling clock 220 according to example embodiments. Sampling may be performed at clock edges of the sampling clock 220, e.g. at each rising and/or each falling edge. The optical signal 200 and the sampling clock signal may be misaligned in phase, resulting in suboptimal sampling moments. Such a phase misalignment may be expressed in seconds, e.g. nanoseconds, or in radians or degrees, representing an angle within a period of the reference clock signal. Alternatively, the phase misalignment may be expressed as a normalised angle in an interval [0,1], wherein the value '0' corresponds to 0° or 0 radians and the value '1' corresponds to 360° or $2\pi$ radians. Misalignments may, for example, result from uncertainty of the phase of the transmit signal, e.g. due to channel distortions, clock jitter at the transmitter and/or receiver 1, and/or frequency wandering. Therefore, the CDR circuitry is configured to iteratively synchronise to the incoming signal to sample at appropriate sampling times. The sampling clock 220 is adapted during the CDR process to come close to an ideal sampling moment for each symbol of optical signal 200. The ideal sampling moment may, for example, be the middle of a corresponding eye diagram. By the sampling, recovered data 210 is obtained from optical signal 200. The recovered data 210 may be provided to a controller circuitry 23 of the optical receiver 1 for further processing.

The circuitry 22 is initialised with an estimate 250 of an initial phase error between the received optical signal 200 and the reference clock 220. The initial phase error may for example be the phase difference between an edge of the sampling clock 220 and the optimal sampling time of optical signal 200. The circuitry 22 adjusts the sampling clock 220 to compensate for the estimated initial phase error before beginning the CDR process. By the compensation, the sampling time is closer to the ideal sampling time when the CDR process starts compared to the sampling clock being initialised arbitrarily. Therefore, the CDR circuitry 22 may require less iterations before achieving locking. At the time of locking, the sampling clock is considered aligned with the optimal sampling moment.

The optical receiver 1 further comprises a phase estimation circuitry 21 for obtaining the estimate 250 of the initial phase error. The phase estimation circuitry 21 estimates the initial phase error from the optical signal 200 using the reference clock or sampling clock 220. The circuitry 21 provides the estimate 250 to the controller circuitry 23, which may forward the estimate 250 to the CDR circuitry 22. The phase estimation circuitry 21 may be initialised by a control signal 201 sent by the controller circuitry 23. It is noted that providing, by the estimation circuitry 21, an estimate 250 of the phase error and compensating, by the CDR circuitry 22, for the estimated phase error 250 may be performed when the CDR process is already in progress. This may, for example, be done to further aid the CDR circuitry to lock more quickly. The phase estimation circuitry 21 is configured to perform the steps according to the first aspect to estimate the phase error.

Figure 3 shows a plot 351 of a sampled optical signal 200 and further illustrates the phase error estimation according to example embodiments.

Referring to subplot 351 of Figure 3, the circuitry 21 may receive a portion 203 of the optical signal 200. Subplot 351 shows a horizontal axis 330 indicating time and a vertical axis 320 indicating an amplitude of the portion 203. The portion 203 comprises a number of consecutive unit intervals 310, 311, 312, 313, 314. A unit interval 3 has a duration of a symbol in accordance with the baud rate, which is known to the optical receiver 1. The circuitry 21 samples the portion 203 using sampling clock 220. For the sampling, a plurality of possible sampling positions is defined within a unit interval 3 relative to the reference clock 220 in the optical receiver 1. Subplot 350 shows an example of four possible sampling positions 300, 301, 302, 303, at respective positions 0, 0.25, 0.5 and 0.75 within unit interval [0,1], 3. In each interval 310, 311, 312, 313, 314, of the portion 203 the sampling is performed in at least one of the possible sampling positions. For example, with fractional sampling, there is not a sample taken at every sampling position 300, 301, 302, 303 in every interval. It is only necessary to collect samples at every sampling position 300, 301, 302, 303 over the course of all intervals of the portion 203. As such, a plurality of samples is obtained for each sampling position 300, 301, 302, 303. In the example of subplot 351 shown in Figure 3, four samples are taken in each unit interval 310, 311, 312, 313, 314. Samples 30 up to 51 taken at times $t_0$ up to $t_{21}$ respectively. This corresponds to a four times oversampling. For sampling position 300, the corresponding plurality of collected samples contains samples 30, 34, 38, 42, 46, 50. For sampling position 301, the corresponding plurality of collected samples contains samples 31, 35, 39, 43, 47, 51. For sampling position 302, the corresponding plurality of collected samples contains samples 32, 36, 40, 44, 48. For sampling position 303, the corresponding plurality of collected samples contains samples 33, 37, 41, 45, 49.

After the sampling step, at least one possible sampling position is selected for determining a temporal property. In the example embodiment of Figure 3, all the positions 300, 301, 302, 303, are selected from the plurality 300, 301, 302, 303. Next, a temporal property is evaluated for each position 300, 301, 302, 303. Temporal property values 3000, 3001, 3002, 3003 are determined for the positions 300, 301, 302, 303, respectively. Subplot 352 shows an example embodiment of the temporal property plotted for the positions 300, 301, 302, 303, over the unit interval 3. The temporal property at a position is determined at least using the corresponding plurality of samples. For example, temporal property value 3001 for position 301 is determined from the samples 31, 35, 39, 43, 47, 51, and optionally also from other samples corresponding to other sampling positions 300, 302, 303. A mathematical expression corresponding to the temporal property may be evaluated for the samples 31, 35, 39, 43, 47, 51 and optionally including other samples additionally.

Upon extracting the temporal property over the unit interval 3, a graph can be fitted using the obtained values of the temporal property, e.g. through the points (300,3000), (301,3001), (302,3002), (303,3003). As such, the change of the temporal property within the unit interval 3 can be characterised. In a final step, the initial phase error 250 is estimated from the fitted curve. Figures 4, 5 and 6 illustrate example embodiments of how the initial phase error 250 may be obtained.

Figure 4 shows a plot 450 with samples 30-51 of an optical signal 200 and a plot 451 of a fitted curve 410 for estimating the phase error from the samples by applying a phase detector function according to an example embodiment.

Subplot 450 shows a graph with horizontal axis 330, vertical axis 320 and samples 30-51 taken at times $t_0$ up to $t_{21}$ as in subplot 351 of Figure 3. After obtaining the samples 30-51, a temporal property is derived for at least one of the positions 300, 301, 302, 303 of the unit interval 3. In the example embodiment of Figure 4, the temporal property is derived for each of the positions 300, 301, 302, 303. As an example, the steps performed to obtain a temporal property value 401 for the position 301 are illustrated in Figure 4.

In a first step, a phase detector function $f_1$ e.g. a polynomial phase detector function, is performed for each sample of the plurality of samples 31, 35, 39, 43, 47, 51, corresponding to position 301. For example, for sample 31, phase detector function $f_1$ is performed on sample 31 and adjacent samples 30, 32, resulting in a first phase detector output 91. For example, the following partially non-linear function may be applied as an example:

$$f_1 = sign(x[k]) * (x[k-1] - x[k+1]);$$

wherein sample 30 is taken as x[k-1], sample 31 is taken as x[k], sample 32 is taken as x[k+1] and wherein *sign()* represents the sign function. This example illustrates an oversampled variant of a Mueller-Muller phase detector. Alternatively, the Mueller-Muller phase detector function may be applied, wherein x[k-1], x[k], and x[k+1] are samples from the same plurality of samples, e.g. the plurality corresponding to position 301. For example, when evaluating $f_1$ with sample 35 as a centre, sample 31 is taken as x[k-1], sample 35 is taken as x[k] and sample 39 is taken as x[k+1].

Alternative phase detector functions may be the following Gardner phase detector function:

$$f_1 = x[k] * (x[k-1] - x[k+1]);$$

and the following zero-crossing phase detector function:

$$f_1 = x[k] * (sign(x[k-1]) - sign(x[k+1])).$$

Next, for sample 35, phase detector function $f_1$ is performed on sample 35 and adjacent samples 34, 36, resulting in a second phase detector output 92. This is also done for samples 39, 43, 47 and 51, resulting in additional phase detector outputs 93, 94, 95, 96. The first, second and additional phase detector outputs are jointly averaged, thereby obtaining the temporal property value 401. The averaging is represented in Figure 4 by averaging function $f_2$.

When determining the estimate 250 by applying a phase detector function, analogous steps may be performed for the remaining positions 300, 302, 303, resulting in temporal property values 400, 402, 403. Subplot 451 shows the temporal property values 400, 401, 402, 403. Subplot 451 shows a horizontal axis representing the unit interval 3. Vertical axis 420 represents the temporal property values.

By applying a phase detector function, the behaviour of the resulting temporal property over the unit interval 3 may be sinusoidal-like. A sinusoidal interpolation may further exploit this effect by fitting the temporal property curve 410, as illustrated in subplot 451 of Figure 4. Estimating the initial phase error 250 comprises determining a zero-crossing 425 of the curve 410. The initial phase error 250 corresponds to the interpolated position 425 within the unit interval 3 where the zero-crossing occurs.

Figure 5 illustrates an example embodiment wherein the temporal property is obtained by performing a discrete frequency transformation.

Subplot 550 shows a graph with horizontal axis 330, vertical axis 320 and samples 30-51 taken at times $t_0$ up to $t_{21}$ as in subplot 351 of Figure 3. According to the embodiment of Figure 5, a discrete frequency transformation is performed, for example discrete Fourier transform, DFT. In Figure 5, it is indicated that the DFT is calculated for position 301 on samples 31-51, i.e. starting from a sample 31 at the position 301. By applying the DFT, a series of frequency components is obtained from the series of time samples 31-51. From the series of frequency components, a single frequency component is kept. This chosen frequency component is referred to as the characteristic frequency component and may, for example be the component corresponding to half the baud rate. Function $f_3$ entails a first step of performing the DFT, a second step of selecting the characteristic frequency component and a third step of determining an argument of the characteristic frequency component. The argument is a measure of a ratio of imaginary vs. real components of the complex number. After performing function $f_3$, the temporal property value 501 is obtained for position 301.

Upon determining value 501, a linear curve 510 is fitted through it with a slope of $\pi$, see subplot 551. The temporal property is an argument, i.e. an angle in the complex plane. Within a unit interval 3 having the length of a symbol, the argument may therefore linearly shift with slope $\pi$. At the position 525 where the argument is zero, the amplitude of the frequency component is expected to be maximal when the characteristic frequency component is chosen as half the baud rate. That may be the position where the sampling is optimal. The initial phase error 250 then comprises the opposite of the argument to compensate towards the optimal sampling time.

The determining of the temporal property is performed for at least one of the positions within the unit interval 3, for example only for position 301. The function may also be performed for one or more of the remaining positions 300, 302, 303, resulting in temporal property values 500, 502, 503, to obtain a more accurate estimation 250.

Figure 6 illustrates an example embodiment wherein the temporal property is obtained by weighting samples using a repetitive pattern.

Subplot 650 shows a graph with horizontal axis 330, vertical axis 320 and samples 30-51 taken at times $t_0$ up to $t_{21}$ as in subplot 351 of Figure 3. According to the embodiment of Figure 6, samples 30-51 are weighted with values of a repetitive pattern, e.g. alternating periodic pattern 640, see subplot 651. Signal 640 alternates at the baud rate, i.e. a period of the signal 640 has the length of 2 symbols. As an example, subplot 651 illustrates the process to determine the temporal property over unit interval 3 for position 301. Each sample 31, 35, 39, 43, 47, 51 is multiplied by a value 61, 65, 69, 73, 77, 81 of signal 640 at a corresponding time $t_1$, $t_5$, $t_9$, $t_{13}$, $t_{17}$, $t_{21}$ respectively, resulting in weighted outputs 691, 692, 693, 694, 695, 696. The results are summed to obtain temporal property value 601. The multiplication operation is depicted in Figure 6 as $f_4$. The summation operation is depicted in Figure 6 as $f_5$.

According to the embodiment of Figure 6, analogous steps are performed for the remaining positions 300, 302, 303, resulting in temporal property values 600, 602, 603. Subplot 652 shows the temporal property values 600, 601, 602, 603. Subplot 652 shows a horizontal axis representing the unit interval 3. Vertical axis 620 represents the temporal property values. It is not required to determine a temporal property value for all positions 300, 301, 302, 303. In a preferred embodiment, the temporal property value is determined for at least two positions.

By applying weighting by an alternating signal 640, the behaviour of the resulting temporal property over the unit interval 3 may be sinusoidal-like. A sinusoidal interpolation may be appropriate for fitting the temporal property curve 610, as illustrated in subplot 652 of Figure 6. Estimating the initial phase error 250 comprises determining a maximum 625 of the curve 610. The initial phase error 250 corresponds to the interpolated position 625 within the unit interval 3 where the zero-crossing occurs.

It will be apparent that the figures are simplified and merely serve an illustrative purpose. For example, the portion 203 in Figures 3, 4, 5 and 6 may comprise many more consecutive unit intervals than shown in the figures, e.g. 128 consecutive unit intervals. As another example, the consecutive unit intervals are depicted as a periodic signal, however, the portion 203 may comprise a more randomised pattern.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical receiver (1) for a passive optical network (100), PON, comprising a phase estimation circuitry (21) and a clock-and-data recovery, CDR, circuitry (22), wherein the CDR circuitry is configured to be initialised with an estimate of an initial phase error (250) between a received optical signal (200) and a reference clock (220), and wherein the phase estimation circuitry is configured to estimate the initial phase error by performing the steps of:

    - receiving a portion (203) of the optical signal, the portion comprising consecutive unit intervals (310;311;312;313;314);
    - sampling the portion during the consecutive unit intervals using the reference clock; wherein, in each of the consecutive unit intervals, the sampling is performed in at least one of a plurality of possible sampling positions; and wherein the sampling is further performed such that a plurality of samples is obtained for each of the possible sampling positions;
    - determining, for at least one possible sampling position, a temporal property of the portion of the optical signal in the respective sampling position at least from the plurality of samples corresponding to the possible sampling position, thereby obtaining a temporal property for each of the at least one possible sampling position;
    - fitting a curve (410;510;610) characterising a change of the temporal property within a unit interval (3); and
    - estimating the initial phase error from the fitted curve.

2. The optical receiver according to claim 1, wherein the determining comprises:

    - for each sample of the at least one possible sampling position, performing a phase detector function based on the sample and adjacent samples, thereby obtaining a plurality of phase detector outputs; and
    - averaging the phase detector outputs, thereby obtaining the temporal property for the corresponding possible sampling position.

3. The optical receiver according to claim 2, wherein the phase detector function is at least partly linear.

4. The optical receiver according to claim 2 or 3, wherein the phase detector function is at least partly non-linear.

5. The optical receiver according to claim 4, wherein the phase detector function is a Mueller-Muller phase detector function.

6. The optical receiver according to claim 1, wherein the determining of a temporal property comprises weighting the corresponding samples with values of a repetitive pattern, alternating at a baud rate corresponding to the unit interval, at corresponding time instances.

7. The optical receiver according to any one of claims 3-6, wherein the fitting of the curve comprises performing a sinusoidal interpolation.

8. The optical receiver according to claim 6 and 7, wherein estimating the initial phase error comprises determining the initial phase error as a phase within the unit interval where an extremum of the curve occurs.

9. The optical receiver according to claim 1, wherein the determining comprises performing a discrete frequency transformation to obtain a characteristic frequency component of the optical signal for the at least one possible sampling position, and wherein the temporal property comprises an argument of the characteristic frequency component.

10. The optical receiver according to claim 9, wherein the characteristic frequency component corresponds to half of a baud rate, corresponding to the unit interval.

11. The optical receiver according to claim 9 or 10, wherein performing the discrete frequency transformation for one possible sampling position comprises performing the discrete frequency transformation on consecutive samples, starting from a sample at that possible sampling position.

12. The optical receiver according to any one of claims 9-11, wherein fitting the curve comprises performing a linear interpolation.

13. The optical receiver according to any one of claims 9-12, wherein estimating the initial phase error comprises determining the opposite of an argument of the characteristic frequency component.

14. The optical receiver according to claim 7 and any one of claims 3-5, or, according to claim 12 or 13, wherein estimating the initial phase error comprises determining a zero-crossing (425;525) of the curve.

**15.** An optical line terminal (10), OLT, or an optical network unit (11;12;13;14), ONU, comprising the optical receiver according to any one of the preceding claims.

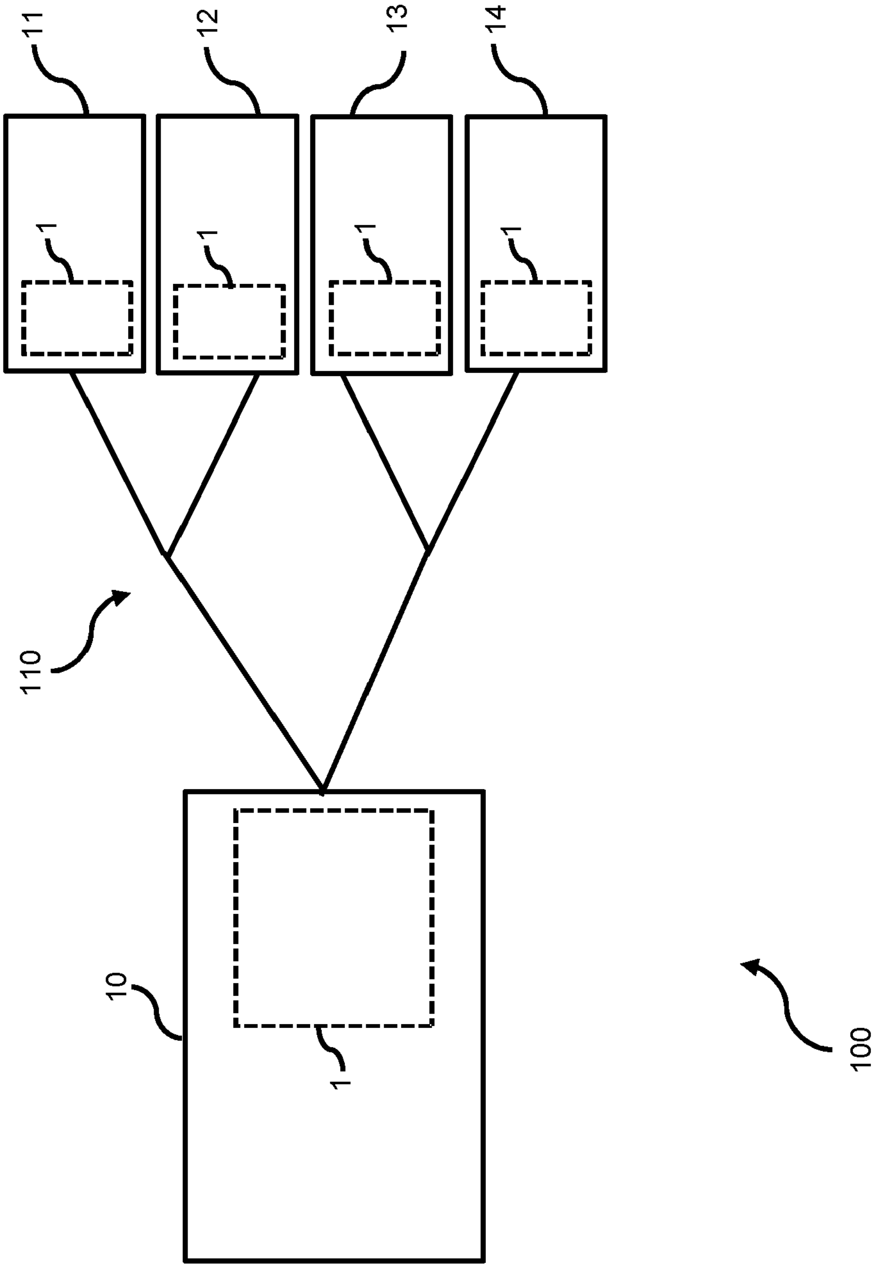


Fig. 1

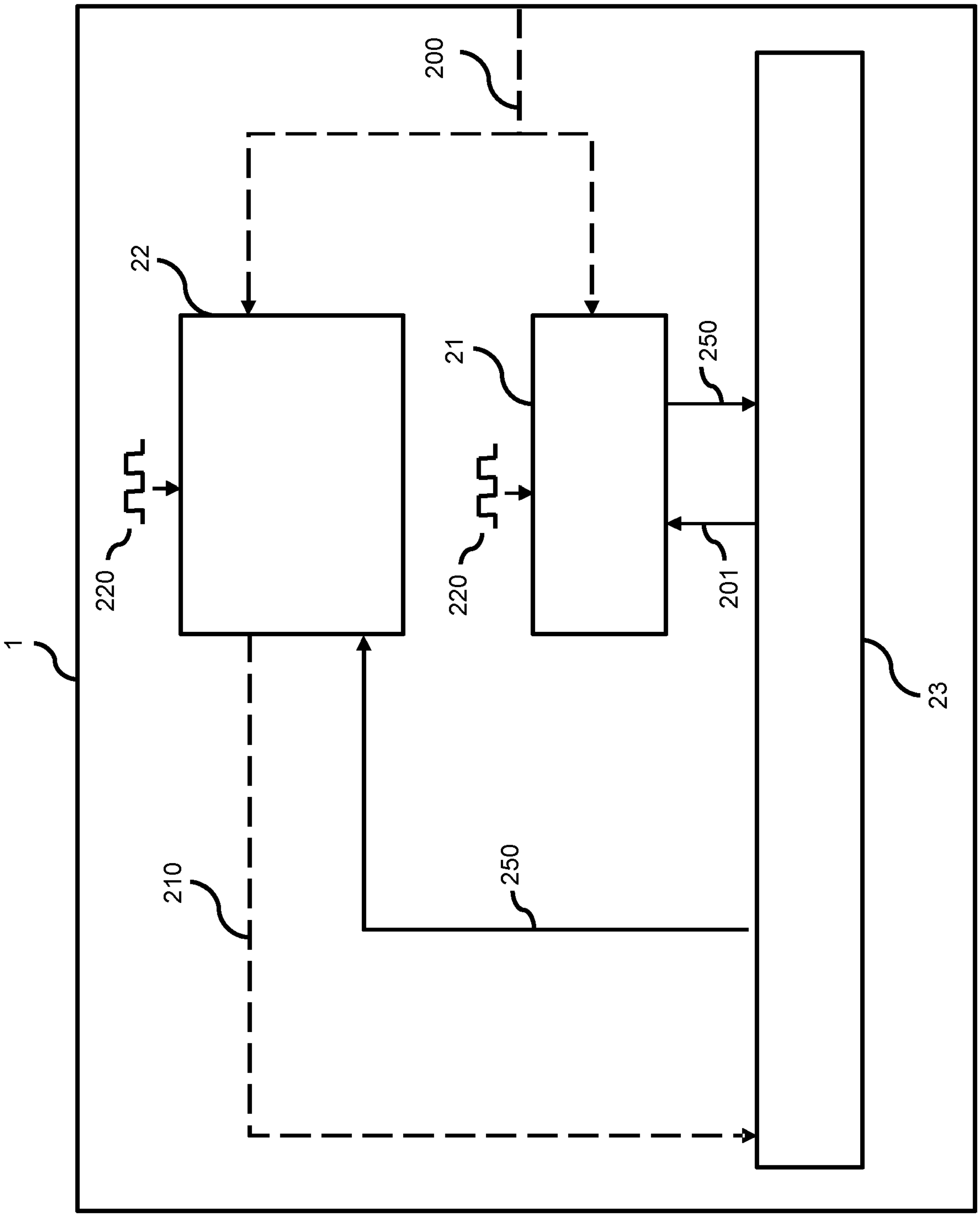


Fig. 2

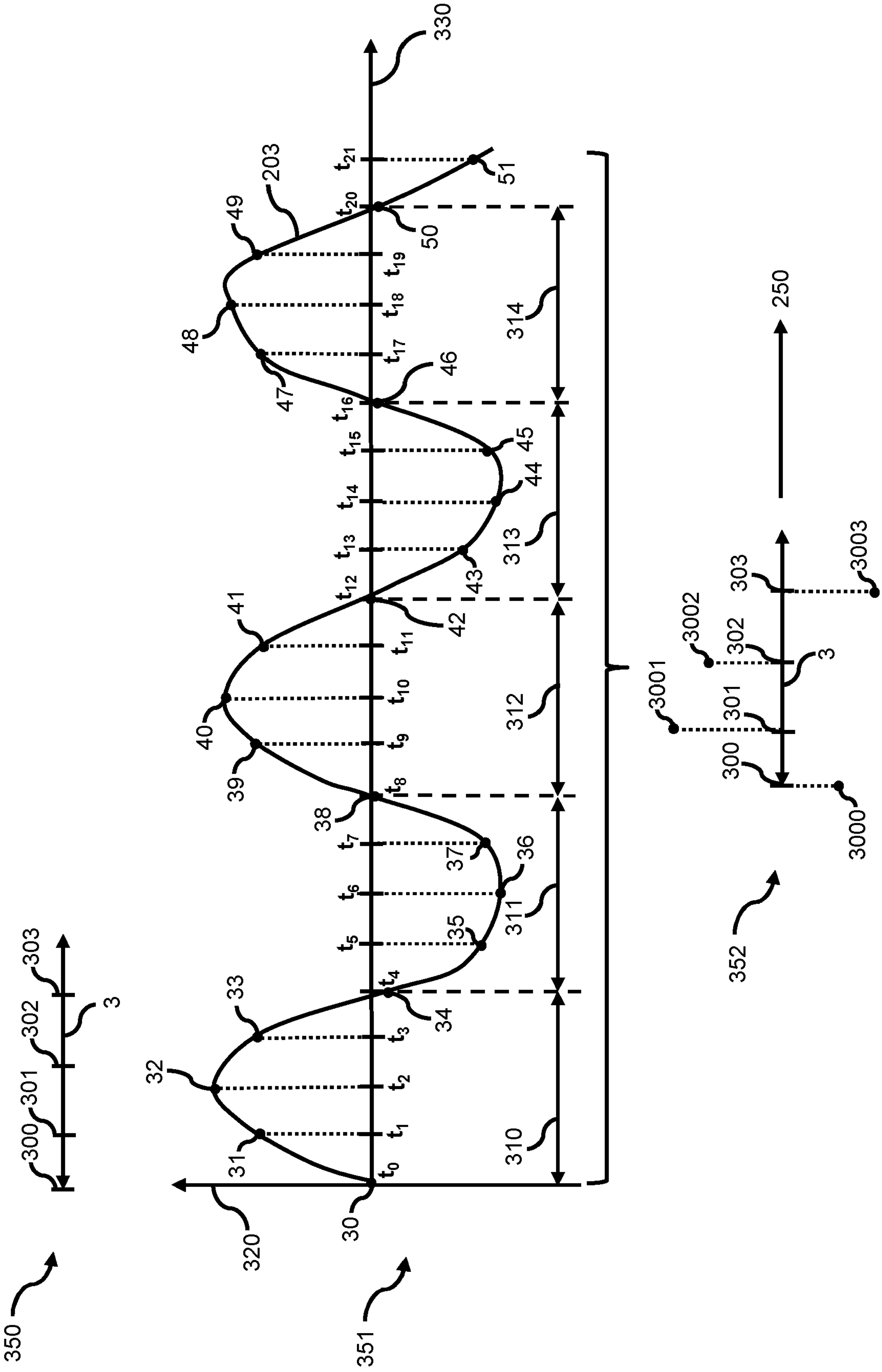

350
351
352
300
301
302
303
3
320
330
30
31
32
33
34
35
36
37
38
39
40
41
42
43
44
45
46
47
48
49
50
51
203
310
311
312
313
314
250
3000
3001
3002
3003
$t_0$ $t_1$ $t_2$ $t_3$ $t_4$ $t_5$ $t_6$ $t_7$ $t_8$ $t_9$ $t_{10}$ $t_{11}$ $t_{12}$ $t_{13}$ $t_{14}$ $t_{15}$ $t_{16}$ $t_{17}$ $t_{18}$ $t_{19}$ $t_{20}$ $t_{21}$


Fig. 3

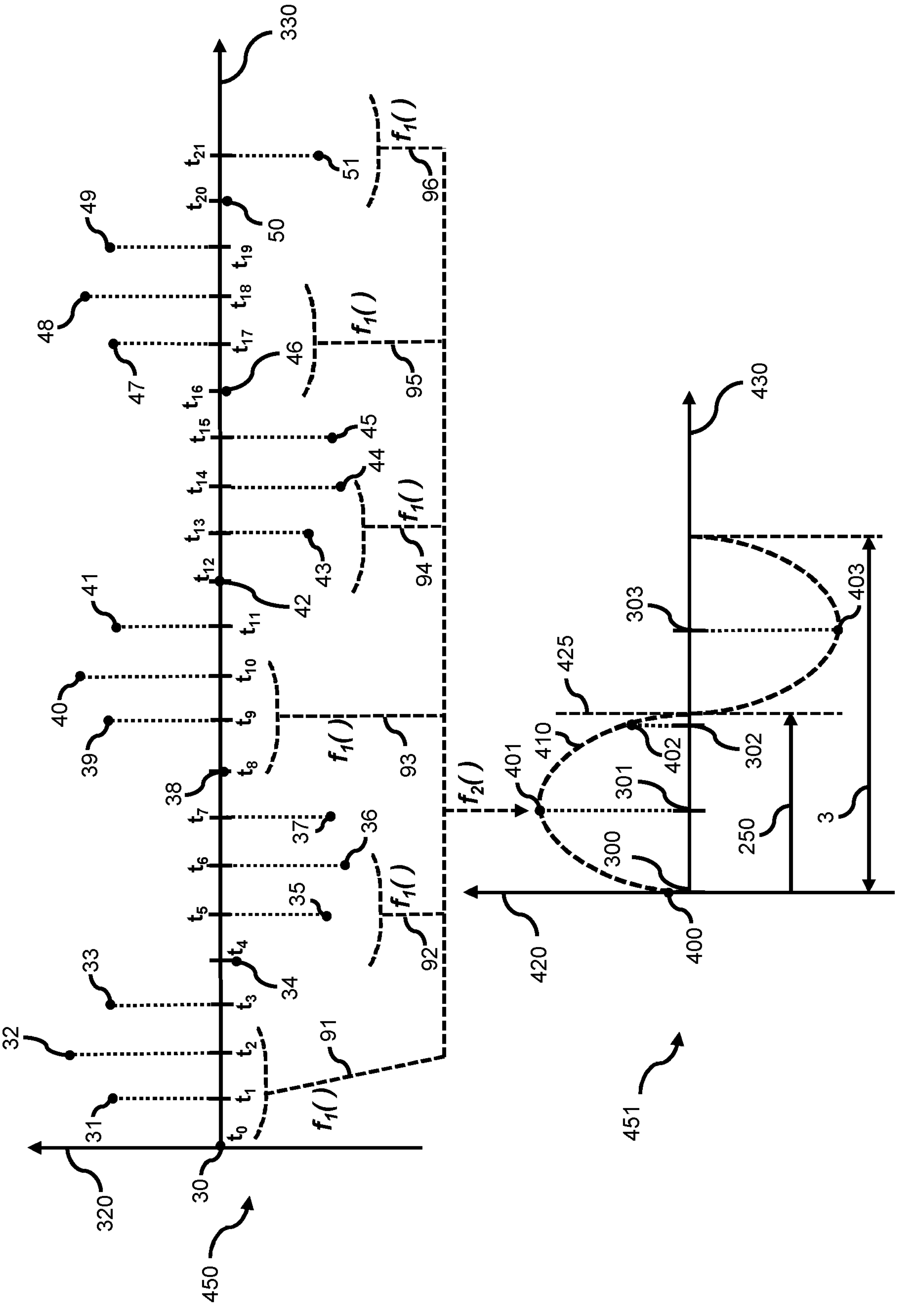

330
320
30
450
t0
t1
t2
t3
t4
t5
t6
t7
t8
t9
t10
t11
t12
t13
t14
t15
t16
t17
t18
t19
t20
t21
31
32
33
34
35
36
37
38
39
40
41
42
43
44
45
46
47
48
49
50
51
$f_1(\ )$
$f_2(\ )$
91
92
93
94
95
96
420
430
451
400
300
301
302
303
401
402
403
410
425
250
3


Fig. 4

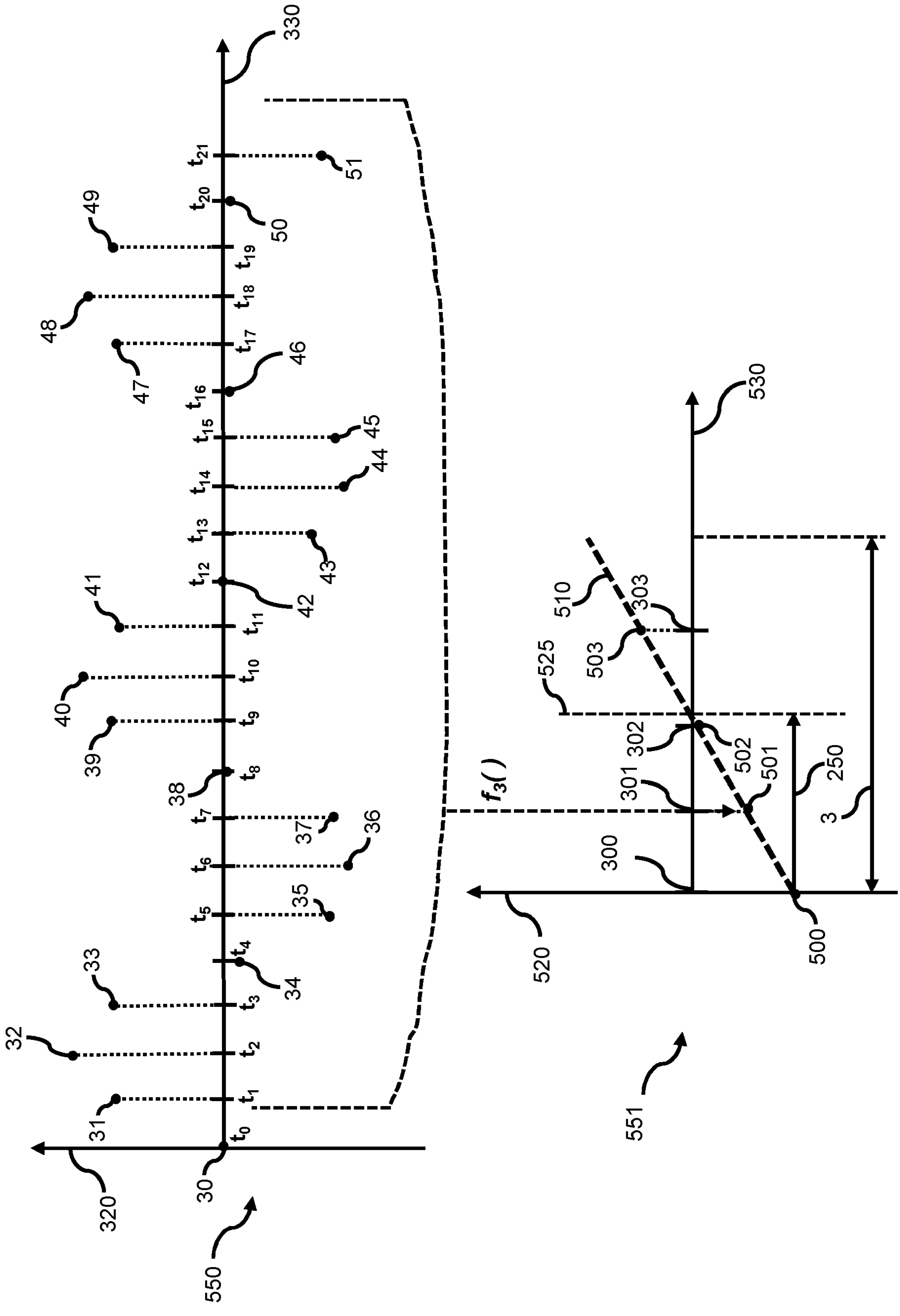
330
320
30
550
$t_0$
$t_1$
$t_2$
$t_3$
$t_4$
$t_5$
$t_6$
$t_7$
$t_8$
$t_9$
$t_{10}$
$t_{11}$
$t_{12}$
$t_{13}$
$t_{14}$
$t_{15}$
$t_{16}$
$t_{17}$
$t_{18}$
$t_{19}$
$t_{20}$
$t_{21}$
31
32
33
34
35
36
37
38
39
40
41
42
43
44
45
46
47
48
49
50
51
$f_3(\,)$
530
520
510
525
500
501
502
503
300
301
302
303
250
3
551

Fig. 5

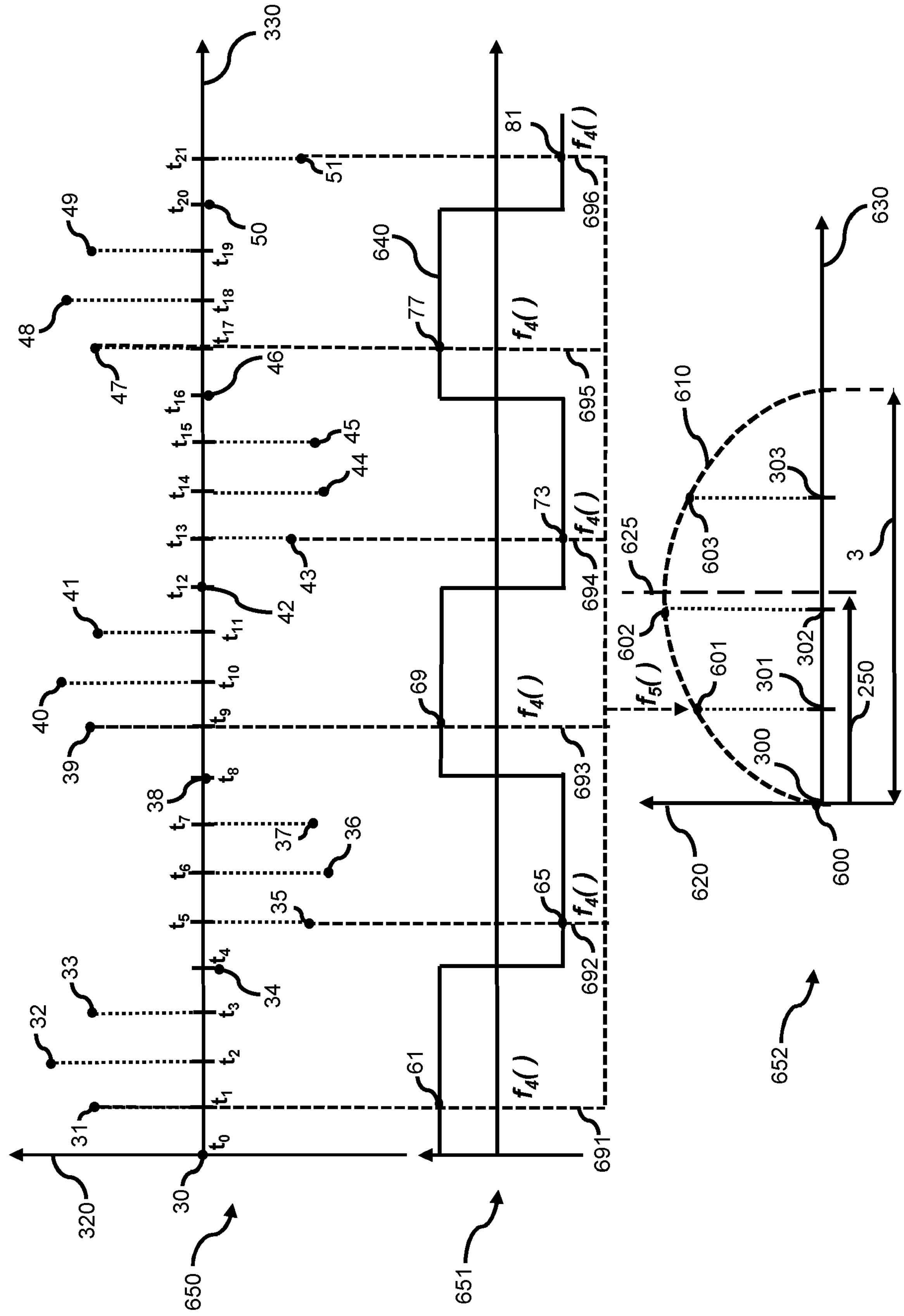
330
320
30
650
651
652
t0
t1
t2
t3
t4
t5
t6
t7
t8
t9
t10
t11
t12
t13
t14
t15
t16
t17
t18
t19
t20
t21
31
32
33
34
35
36
37
38
39
40
41
42
43
44
45
46
47
48
49
50
51
61
65
69
73
77
81
640
691
692
693
694
695
696
f4( )
f5( )
600
601
602
603
610
620
625
630
300
301
302
303
250
3

Fig. 6

Europäisches Patentamt
European Patent Office
Office européen des brevets

# EUROPEAN SEARCH REPORT

Application Number
EP 24 16 1104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/208528 A1 (IGARASHI RYO [JP]) 29 June 2023 (2023-06-29) * paragraph [0070] - paragraph [0078]; figures 1,3,4,5,7 * * paragraph [0087] - paragraph [0097] * * paragraph [0106] - paragraph [0114] * ----- | 1-15 | INV. H04B10/61 H04L7/033 |
| A | GU ZHEN ET AL: "28 Gbaud PAM-4 Burst-Mode CDR With Reconfigurable Sampling Scheme", IEEE TRANSACTIONS ON CIRCUITS AND SYSTEMS I: REGULAR PAPERS, IEEE, US, vol. 70, no. 5, 1 May 2023 (2023-05-01), pages 1917-1927, XP011939683, ISSN: 1549-8328, DOI: 10.1109/TCSI.2023.3242366 [retrieved on 2023-02-09] * the whole document * ----- | 1-15 | |
| A | WEN XI ET AL: "Digital Timing Recovery for Fractional Oversampling Coherent Optical Receivers", 2021 4TH INTERNATIONAL CONFERENCE ON INFORMATION COMMUNICATION AND SIGNAL PROCESSING (ICICSP), IEEE, 24 September 2021 (2021-09-24), pages 315-321, XP034029913, DOI: 10.1109/ICICSP54369.2021.9611844 [retrieved on 2021-11-10] * the whole document * ----- -/-- | 1-15 | TECHNICAL FIELDS SEARCHED (IPC) H04B H04L |

The present search report has been drawn up for all claims

1

| Place of search | Date of completion of the search | Examiner |
|---|---|---|
| Munich | 23 July 2024 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 16 1104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OSSIEUR P ET AL: "A dual-rate burst-mode bit synchronization and data recovery circuit with fast optimum decision phase calculation", AEU - INTERNATIONAL JOURNAL OF ELECTRONICS AND COMMUNICATIONS, ELSEVIER, AMSTERDAM, NL, vol. 63, no. 11, 1 November 2009 (2009-11-01), pages 931-938, XP026734320, ISSN: 1434-8411, DOI: 10.1016/J.AEUE.2008.07.007 [retrieved on 2008-08-15] * the whole document * ----- | 1-15 | |
| A | US 2008/072130 A1 (STIMPLE JAMES R [US] ET AL) 20 March 2008 (2008-03-20) * paragraph [0016] - paragraph [0019] * * paragraph [0028] * * paragraph [0036] - paragraph [0038] * ----- | 1-15 | |
| A | US 2007/266275 A1 (STIMPLE JAMES R [US] ET AL) 15 November 2007 (2007-11-15) * paragraph [0015] - paragraph [0017] * * paragraph [0023] - paragraph [0026] * ----- | 1-15 | TECHNICAL FIELDS SEARCHED (IPC) |
| A | GARDNER F: "A BPSK/QPSK timing-error detector for sampled receivers", IEEE TRANSACTIONS ON COMMUNICATIONS, IEEE SERVICE CENTER, PISCATAWAY, NJ. USA, vol. 34, no. 5, 1 May 1986 (1986-05-01), pages 423-429, XP002007350, ISSN: 0090-6778, DOI: 10.1109/TCOM.1986.1096561 [retrieved on 2003-01-06] * the whole document * ----- | 1-15 | |

1

The present search report has been drawn up for all claims

| Place of search | Date of completion of the search | Examiner |
|---|---|---|
| Munich | 23 July 2024 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 1104

This annex lists the patent family members relating to the patent documents cited in the above-mentioned European search report. The members are as contained in the European Patent Office EDP file on
The European Patent Office is in no way liable for these particulars which are merely given for the purpose of information.

23-07-2024

| Patent document cited in search report | Publication date | Patent family member(s) | Publication date |
|---|---|---|---|
| US 2023208528 A1 | 29-06-2023 | JP 7481645 B2 | 13-05-2024 |
| | | JP WO2021240695 A1 | 02-12-2021 |
| | | US 2023208528 A1 | 29-06-2023 |
| | | WO 2021240695 A1 | 02-12-2021 |
| US 2008072130 A1 | 20-03-2008 | NONE | |
| US 2007266275 A1 | 15-11-2007 | NONE | |

EPO FORM P0459

For more details about this annex : see Official Journal of the European Patent Office, No. 12/82